# EUROPEAN PATENT APPLICATION

(11) **EP 1 516 521 A2**
(43) Date of publication of application: **23.03.2005**
(21) Application number: 04445098.9
(22) Date of filing: 16.09.2004
(51) Int. Cl.: A01B 61/04

(54) **Tool carrier**

(30) Priority: 18.09.2003 SE 0302492
(71) Applicant: Askling, Lars, 590 33 Borensberg (SE)
(72) Inventor: Askling, Lars, 590 33 Borensberg (SE)
(74) Representative: Berglund, Erik Wilhelm

(57) **Abstract**

Tool carrier for, for instance hoe blades, sow shares, manure tools etc, intended to be arranged side by side on a transverse beam. Each tool carrier include a telescoping part (7) that against the action of a spring is displacable upward, backward in relation to the working direction of the tool carrier. In the lower end of the telescoping part (7) a bracket (14) for hoe tools, sow share etc. is arranged. A spring is arranged in the telescoping part biasing the telescoping part downwards. In the lower end of the telescoping part a wheel (10) is arranged adjustable vertically in relation to the telescoping part and thereby controlling the working depth. At uneven ground wheel and tool spring up and back adapting to the ground. At obstacles, for instance a large rock the tool can spring away upwards without requiring any special release mechanism. The wheel is advantageously arranged behind the tool.

## Description

In order to control weeds at the cultivation of corn and oil plants, as for instance thistles, it is known mechanically to cut the stems of the weeds by means of a row hoe. In order to enable this the crop is sown in rows and the mechanical working of the weed then take place between these rows. For the sake of efficiency a number of cutting blades are mounted more or less side by side so that a number of rows can be worked at the same time. The interest in mechanical treatment of weeds has increased corresponding to the wish to reduce chemical control among other things in order to achieve ecological cultivation.

A problem at the row hoes that exist today is that they only allow treatment as long as the crop is comparatively short. A further problem at known row hoes is that the working speed gets very low and thus costly and time consuming respectively.

In order for the treatment achieved by means of row hoes to be efficient it is necessary with a good coincidence between the sown rows and the treatment by the hoe blades, that is the cc-distance between the rows must be constant and the rows must be as straight as possible. The majority of sowing machines today cope badly with this, partly there is in general a certain mobility or play laterally for the sow-shares, partly the fastening of some sow shares migrate laterally. This makes a later mechanical treatment and fertilizing respectively more difficult.

In view of the above problems the invention has as its object to provide a tool carrier for the support of among other things hoe blades, sow shares, manure shares etc, that are more efficient, allow working also when the corn has grown higher than what today is the case and that furthermore allow considerable faster, more forceful and more exact working both vertically and laterally.

In accordance with the invention the above object is solved by the tool carrier including telescoping parts provided with tool brackets, the telescoping parts being moveable against springs or spring like means and or against weights or parts thereof. Each telescoping part is with advantage inclined rearward seen in the driving direction so that the lower end is facing forward. The movement of the tool carriers can advantageously be linear or slightly curved. This can for instance be achieved with tubes that are moveable in relation to each other, alternatively a linear, alternatively entirely or only partly curved element can be journaled in rollers or slide bearings.

Since the tool carriers in accordance with the above can be made thin and tall a large clearance in height can be achieved, that thus allow among other weed fighting even when corn or other crop has reached great height. In this way the possibility is improved not only temporary to fight the weed but also the long term depletion of weed, for instance thistles, that for their survival and spreading have vigorous root system below the plow depth

Further advantages and characteristics of the invention are apparent from the claims as well as the following description with reference to enclosed drawing where fig 1 shows a preferred embodiment of a tool carrier in accordance with the invention and figs 2 and 3 help means for the control of the tool carrier in accordance with the invention.

Tool carriers in accordance with the invention are mounted side by side on one or several transverse beams.

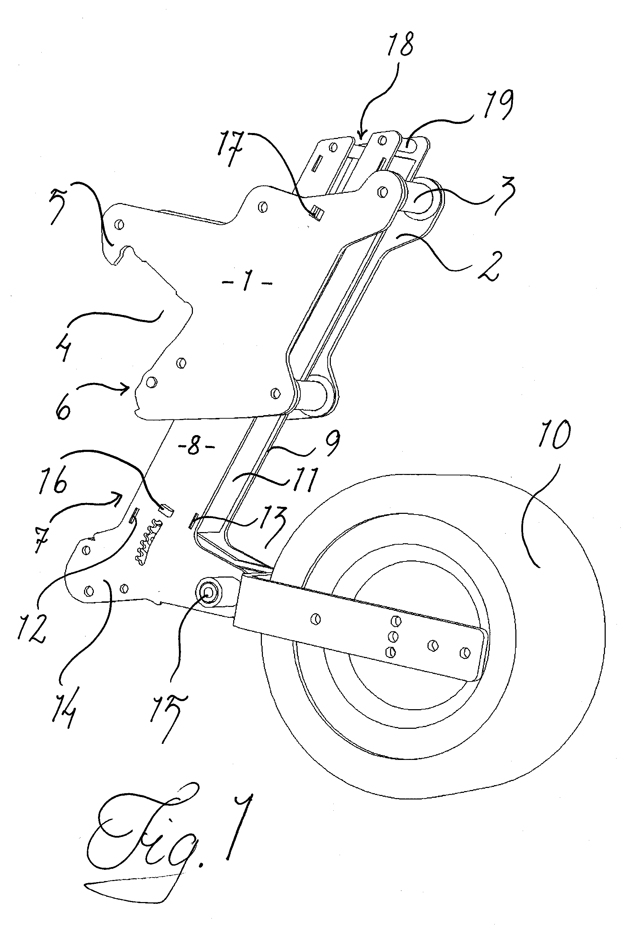

Fig 1 shows an example of a preferred design of the tool carrier according to the invention. It includes a mounting part comprising two lateral panels 1, 2 that are held together with distance elements and bolts. The lateral panels are in their forward facing edges provided with a recess 4 for the hanging on a beam with a square cross-section. The mounting part is with a hook-like protrusion hooked over the beam and pivoted in place. In a lower distance piece 6 a threaded diametrical hole is arranged and into this, at mounting, a bolt is threaded that press a flat bar iron against the lower edge of the beam and position locking recesses in the lateral panels so that the tool carrier can be fixed at an arbitrary location along the beam. In this way this bolt alone will take forces directed straight rearward on the tool carrier and can thereby through appropriate dimensioning and/or shaping serve as a shear bolt in case the tool carrier hit and get stuck at something so forceful and large that the inherent ability to spring away is insufficient. Since the beam is inclined 45° a possible passing of crop straws that are so tall that they come in contact with the beam get softer for these than what would have been the case if the beam had its bottom edge horizontal.

The tool carrier further includes a backwards upwards inclined telescoping part 7 that is displacable between flange provided rollers 3 arranged in the mounting part journaled on four of the distance elements. The telescoping part is made of two elongate side panels 8, 9 that in the lower end forms a bracket 14 for tools and a bracket for a support wheel 10. Between the side panels 8, 9 a front and a rear 11 longitudinal panels are arranged. These elongate panels are provided with protruding ears 12 extending into corresponding elongate holes in the side panels and there connected to these through welding. Through this structure the brackets for the tools as well as for the wheel are in a rational way integrated with the telescoping part that can also be provided with further recesses where require and this can be done at the same time that the side panels are made, for instance by means of so called laser cutting.

Through the way to fabricate the telescoping part it also becomes possible to change this movement from being entirely linear to for instance circular quite simply by cutting the side panels with a slight curvature. If so desired also combined movements can be achieved, as for instance first a linear movement and then a pivoting movement or vice versa. In order for contact to exist with all rollers for a straight as well as for a curved telescoping part it may be necessary to vary the width of the side panels so that the telescoping part all the time fill up the distance between the rollers, also this can rationally be achieved by cutting and welding of the telescoping part. A pivoting movement instead of a straight movement can for instance be desired if one wish the inclination for an essentially horizontally in the ground running cutting blade to be given an increasing angle with increasing resistance so that a simultaneously increased inclination of the cutting blade brings this to try to get down.

The support wheel 10 is arranged behind the working tool that is mounted in the bracket 14 on the front side. This means that the wheel will run on prepared ground, which result in the movements in the height direction will become smaller due to larger objects as stones and the like being pushed to the side by the working tool whether this is a hoe, sow share etc. The wheel is further comparatively wide and will roll on the flanks or the side of the track that is made of the tool which furthers a more smooth movement in the height direction. The fork that carry the wheel is pivotably journaled 15 in its bracket and continue in an arm forward and in the front end of the arm is arranged a pivotable axle parallel to the wheel axle and provided with a diametrical threaded through hole. In the threaded hole threaded bar grips. The threaded bar is provided with a flange that is in contact with an inner end of the telescoping part, the end of the bar extending through the end of the telescoping part through an oval hole. The bar extends up to the upper end of the telescoping part where the bar is provided with a key grip to change the upper end position of the wheel by turning. Also the end inside the tube is fastened by means of protruding ears 16.

Inside the telescoping part a pressure spring is arranged resting in the lower end against the flange on the bar. The pressure spring is in the upper end in contact with an upper end side that is arranged in the telescoping part but with laterally protruding ears is fixed in openings in the lateral panels of the mounting part. In order to allow the telescoping movement, as well as mounting elongate recesses 18 are arranged in the side panels of the telescoping part, the recesses extending upwards from the middle of the side panels and the ears extend through these recesses. Also this end side is of course provided with a thorough hole for the bar for height control. Since the spring is in contact with the flange of the bar the wheel is in the normal case held up against its upper end position. Should however, for instance at an uptilting at transport, the wheel contact something above it can spring away. Furthermore the spring serv as a locking for the bar against turning so that the height adjustment will not change unless the bar is turned manually.

In the lower end the spring is surrounded by a more or less hose like lining that has been inserted into the inner of the telescoping part. This prevents on one hand the spring from bending and contacting the inside of the telescoping part with accompanying disturbing sound generation, on the other hand the hose serve as an end-position damping when the pressure spring is compressed maximally.

The side panels 8, 9 are in the upper end connected by bolts and distance elements 19 that can serve as stop for the movements downwards either by a distance piece abutting the end side or by protruding pins, keys or the like abutting the upper edge of lateral panels. Alternatively the lateral panels can be provided with protrusions that contact the rollers in the end position.

The different tools can be held in place by means of a pivoted hooking and an easily removable pin or the like and be held in the correct angle position by means of suitable stop lugs on tool or tool bracket respectively. The stop lugs on the tool carrier are constituted of distance elements that are held in place by thorough bolts. By arranging several holes for the pin in each tool different adjustment positions may be achieved.

The tool carrier in accordance with the invention achieve simultaneously a resilient adaption or freeing movement at rocks and the like due to the inclined movement. If so desired, as mentioned above, the movement can also be curved if a non linear movement is desired. Advantageously the tool carriers are arranged on one or several parallel beams distributed in the work direction so that the shares laterally are arranged alternating. In this way the risk is reduced that straw residues or really large objects, for instance rocks, can get stuck between two adjacent tools.

Since the tool carrier is sturdy also straight cutting blades can be used which provide a good wear resistance as well as an effective cutting of weed all the way to the outer end of the blade.

When the locking bolt has been released it is simple to push the tool carriers laterally, alternatively units can be removed in their entirety.

The above described transverse beam is by means of at least two arms fastened in the front or rear end of a tractor or some other machine. By means of the hydraulics of the tractor or an inherent hydraulic cylinder the beam and thereby tool carriers and cutting blades are liftable together. Furthermore one of the arms supporting the beam can be arranged adjustable to its length so that the inclination of the beam and thereby the angle of the tool carriers relative the ground can be changed.

When the tool carrier is lowered towards the ground and the tractor travels forward the blades are drawn down into the ground of the inclination of the cutting blade assisted by the weight of the tool carrier and possible spring pressure, until the wheels are in contact with the ground and prevents the cutting blades from getting further down into the ground. The cutting blades then cut at continued travel forward weeds present between the rows of plants.

The inclination of the tube carrying the cutting blades and the movement path of this respectively is chosen as a function of the external circumstances and advantageously the tube is inclined upward rearward seen in the travel direction of the tool carrier at work, in particular 45° to 75° relative the horizontal plane in order to provide a god springing away when obstacles on and or below the ground come in contact with wheels or cutting blades or shares.

By altering the angle of the beam the angel of the cutting blades and thereby the force pulling these down is altered as well as a central adjustment of the working depth of all tools. By means of the stops controlling the working depth this can for the cutting blades be adjusted independent of cutting angle and separately for each tool carrier. Since each tool carrier has its own adjustment no connecting adjustment mechanics is necessary between the tool carriers preventing or making more difficult their individual lateral placing. In most cases the same adjusted depth is desired, but if for instance the tractor tracks have become deeper than the other spaces between the sown rows these cutting blades can be pushed down further.

The arranging of the tool carrier in the front end of the tractor facilitate for the driver when the tools that are arranged in this must be controlled very precisely laterally, for instance so that the hoe blades or fertilizer introducing tools can be guided exactly between the planted rows of growing crop. The use of tool carriers in the front end of the tractor can also be used to achieve a pre-working for tools or machinery arranged in the rear end of the tractor.

When the need for lateral control is not as great but one instead wish to achieve as straight working lines as possible a placing in the rear end of the tractor is preferred, for instance when the tool carrier in accordance with the invention is completed to a sowing machine. Likewise a placing in the rear is preferred if an automatic lateral steering is arranged for the tool carrier for the following of for instance the rows of crop.

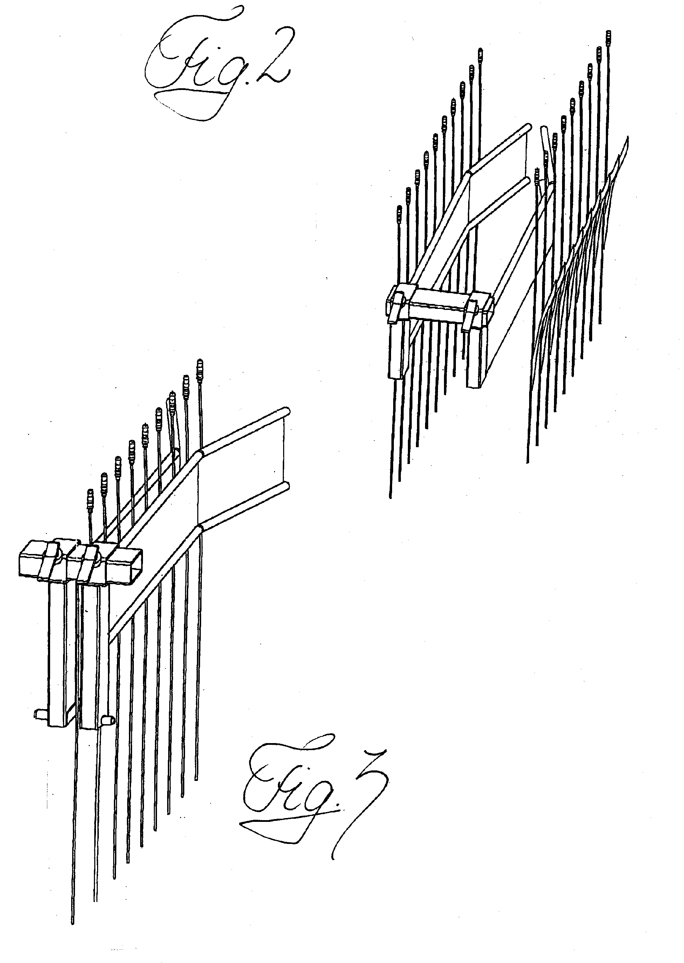

In order further to facilitate the steering by the driver a pair of panels (fig 2 and 3) are arranged in front of the tool carrier, the panels between them defining a channel with essentially parallel sides that in one end widens forward or backward. When the widening is directed backwards the panels are arranged centered relative a cutting blade of the tool carrier and at the driving forward of the tractor these panels will softly ease the corn in the two adjoining sow rows to the side. When the corn in the two neighboring rows are eased in opposite direction the corn straws will stand straight up or alternatively have a symmetric inclination and provided that the tool carrier is centered the inclination to left and right will be symmetric while a deviation from the centered position immediately result in straighter straws on one side and more bent ones on the other. This difference in angle or symmetry is very easy for the driver to see, who in this way considerably simpler and adaptable can steer the tractor so that the tool carrier get exactly where it should be laterally also when driving in a high crop. By means of the above mentioned straw separating panels in particular at seed control a surprisingly high speed can be held. In tests a tool carrier according to the invention has been driven with hoe blades with a good result with 15 km/h resulting in a good time economy in the work.

The widening can instead be facing forward and the panels are then centered between two cutting blades so that they instead gathers the straws from one and the same row. This means that at a deviation laterally all straws are bent to one side or the other, which is easy to see and correct.

The two above described panel devices not do only facilitate the sighting in itself but also have the advantage that the error source that the wind can be is eliminated.

If so is desired the sighting device can be combined with automatic steering by means of mechanical or electric sensors or cameras for the reading of the inclination or inclinations of the straws.

Since the tool carrier is long-legged weed control can take place also when the seed has grown comparatively high and in the shown embodiment weed fighting can still take place when the corn is full grown.

Through the telescoping movement and its inclination the tool carrier provide a number of advantages. To start with individual adaption to uneven ground can take place. Secondly the pendulum movements that the tractor execute due to uneven ground are compensated. Thirdly it is possible to vary the pressure for cutting blades and tools down against and into the ground by lifting and lowering the supporting, connecting transverse beam. Fourthly an efficient and the carried tools saving rock release is obtained. If a cutting blade or other mounted tool contacts a stone that does not yield the tool is pressed backwards during a simultaneous movement upwards, then to return as soon as the obstacle has been passed. Through the inclination forwards for the tool bracket the possibilities are increased for the cutting blade slipping over rocks instead of pulling these up.

Through the possibility to rotate the supporting beam working depth and soil seeking that is the angle of inclination for cutting blades and the like can be varied for all cutting blades at the same time respectively.

Since the spring in the embodiment is arranged inside the tool carrier waste matter and dirt is prevented from entering into this.

Through the simple design and locking of the separate tool carriers to the transverse beam these can easily be released and adjusted laterally according to different spacing of the rows or be removed or exchanged, for instance in the case of damages.

Within the concept of the invention also other designs of the tool carrier are possible, for instance the device may instead of lateral panels include only one panel and/or tubes, beams, profiles etc. further one can consider the tool carriers being provided with fastening means both on the front side and the rear side of the supporting beam, as well as being fastenable on different sides of the beam and possibly with different directions etc.

If so desired the tool carrier according to the invention can first be used for sowing with sow shares and other equipment to be used as a part in a sowing machine. When the sowing is done the tool carrier is changed into a hoe and if the spacing at sowing was the same over the entire width the tool carriers need not to be moved but the tool carrier is only driven displaced laterally a half spacing.

## Claims

1. Tool carrier for agricultural tools, **characterized in that** it includes a telescoping part, a tube, beam or the like that in a mounting part is arranged moveable in its length direction against the influence of a spring or means with a similar function alternatively achieved through the weight of the tool carrier itself or parts thereof.

2. Tool carrier according to claim 1, **characterized in that** the telescoping part, tube, beam or the like in the mounting part is journaled between rollers, possibly provided with flanges.

3. Tool carrier according to claim 2, **characterized in that** the rollers are journaled on distance elements arranged between lateral panels in the mounting part, which lateral panels are held together by bolts extending through the distance elements.

4. Tool carrier according to any of the preceding claims, **characterized in that** the telescoping part essentially is inclined upwards, backwards seen in the travel direction of the tool carrier when in use.

5. Tool carrier according to any of the preceding claims, **characterized in that** a pull or push spring is arranged between the telescoping part and the mounting part to bias the telescoping part downwards.

6. Tool carrier according to any of the preceding claims, **characterized in that** the telescoping part support a wheel arranged in a fork articulated in the telescoping part, the movement of the fork being limited by in particular a stop adjustable with a thread.

7. Tool carrier according to any of the preceding claims, **characterized in that** the threaded part consist of a bar that extends to the upper end of the tool carrier for simple and convenient adjustment.

8. Tool carrier according to claim 6 or 7, **characterized in that** means are arranged for indicating the position of the stop, that is the working depth.

9. Tool carrier according to any of the preceding claims, **characterized in that** the telescoping part is designed to execute a curved, straight or alternating straight and curved movement when displaced in the mounting part.

10. Tool carrier, **characterized in that** it is provided with two in relation to the travel direction angled panels in front of the tool carrier, either to collect straws in a sow row or to separate straws in two neighboring sow rows so that one by means of the straw angles can see if the tool carrier has the right position laterally, alternatively that the angle or symmetry of the straws can be sensed by mechanical, electric, electronic sensors or a camera.
